Europäisches Patentamt

European Patent Office

Office européen des brevets

(11) Publication number : **0 505 334 A1**

(12) **EUROPEAN PATENT APPLICATION**

(21) Application number : **92830132.4**

(22) Date of filing : **19.03.92**

(51) Int. Cl.⁵ : **B60Q 11/00**

PRIORITY 220391 IT MI9100782.

(30) Priority : **22.03.91**

(43) Date of publication of application :
**23.09.92 Bulletin 92/39**

(84) Designated Contracting States :
**DE ES FR GB PT**

(71) Applicant : **Codrino, Giuseppe**
**Via Stazione, 2**
**I-15028 Quattordio (Alessandria) (IT)**

(72) Inventor : **Codrino, Giuseppe**
**Via Stazione, 2**
**I-15028 Quattordio (Alessandria) (IT)**

(74) Representative : **Cicogna, Franco**
**Ufficio Internazionale Brevetti Dott.Prof.**
**Franco Cicogna Via Visconti di Modrone, 14/A**
**I-20122 Milano (IT)**

(54) Solid state device for controlling the lamps of a motor vehicle.

(57)   A solid sate device for controlling the lamps
of a motor vehicle comprises a solid state cir-
cuit comprising two or more power drivers of a
high side type, for controlling lamps of the 21
watt type, and 3 or more drivers, also of the high
side type, for controlling lamps of the 5 watt
type, the device further comprising all of the
required driving, protecting and diagnostic cir-
cuits.

FIG. 1

EP 0 505 334 A1

## BACKGROUND OF THE INVENTION

The present invention relates to a solid state device for controlling the lamps of a motor vehicle and also comprising the necessary driving protection and diagnostic circuits therefor.

As is known, a lot of modern motor vehicles are provided with suitable control central units, the so-called check panels or check controls, which are specifically designed for controlling the operation of several functional units of the motor vehicle as well as the lamps thereof.

This verification and control apparatus, in particular, have been specifically designed for preventing a motor vehicle from circulating with not properly operating lamps, such as the stop lamps, the position lamps, the number plate lamps and the like.

Prior apparatus of the above mentioned type, however, are rather complex construction wise and not fully reliable.

## SUMMARY OF THE INVENTION

Accordingly, the aim of the present invention is to overcome the above mentioned drawback by providing a device for controlling the operation of the lamps of a motor vehicle which also comprises, integrated therewith, in a single circuit, a command and verification function for controlling and verifying the status of the motor vehicle lamps, while providing related diagnostic information.

Within the scope of the above aim, a main object of the present invention is to provide a device of the above mentioned type which also comprises therein protection apparatus for preventing the device from failing, even in case of undesired power supply conditions.

Another object of the present invention is to provide such a control device which is specifically adapted for filtering the input commands having a duration less than a preset debouncing time.

According to one aspect of the present invention, the above mentioned aim and objects, as well as yet other objects, which will become more apparent hereinafter, are achieved by a device for controlling the lamps of the motor vehicle, characterized in that said device comprises a solid state circuit integrating two or more power drivers, of a high side type, for controlling 21 watt lamps, and three or more drivers, also of a high side type, for controlling 5 watt lamps, said solid state circuit further comprising driving protection and diagnostic circuit means as necessary for a proper operation of said device.

## BRIEF DESCRIPTION OF THE DRAWINGS

Further characteristics and advantages of the control device according to the present invention will become more apparent thereinafter from the following detailed disclosure of a preferred, though not not exclusive embodiment thereof, which is illustrated, by way of an indicative but not limitative example in the figures of the accompanying drawings, where:

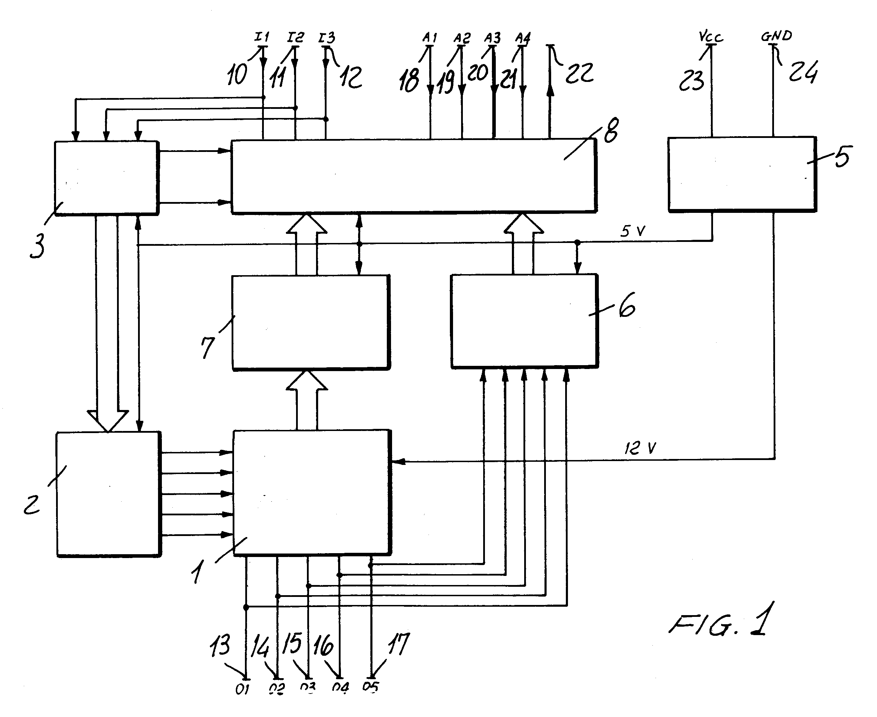

Figure 1 illustrates a schematic block diagram of the control device according to the present invention; and

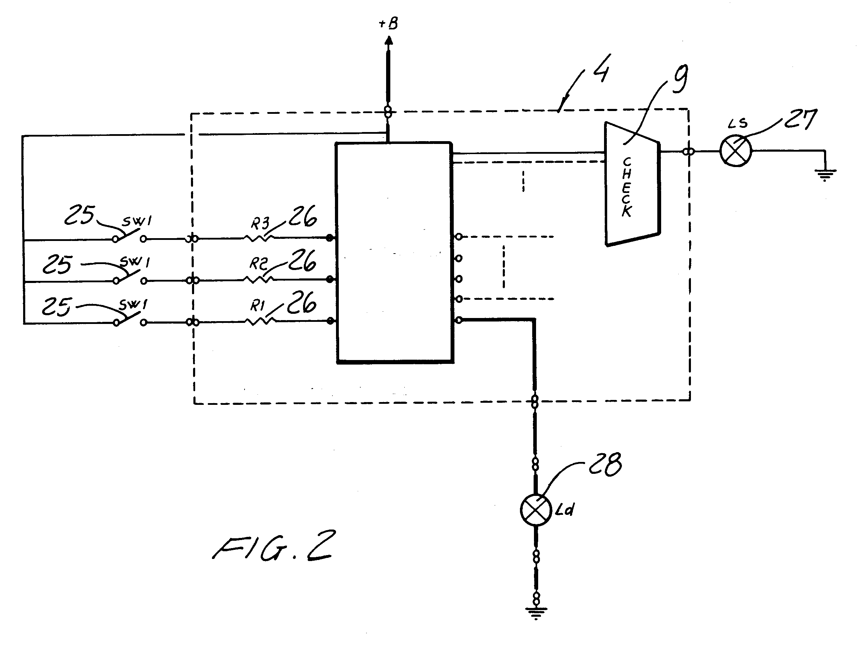

Figure 2 illustrated an application diagram of the subject device.

## DESCRIPTION OF THE PREFERRED EMBODIMENT

With reference to the figures of the accompanying drawings, the device for controlling the lamps of a motor vehicle according to the present invention, comprises a power stage 1, which hold therein MOS technology drivers, a driver stage 2 which hold the charge ,pumps for driving the end stage, and an auxiliary logic 3 which includes therein the input logic, the voltage inner controlling element, the thermal protection means as well as other suitable components of a per se known type.

The electronic module which forms the subject device and which has been generally indicated at the reference number 4 comprises moreover a power supply stage 5, open-circuit sensors 6, current sensors 7 and a diagnostic logic 8 which is specifically designed for driving or controlling a check panel 9.

In this connection it should be moreover pointed out that the above disclosed module comprises a series of protecting means for preventing the device from erroneously operating as one or more of the following conditions occur:

– a short circuit of the outputs toward ground or toward the positive side of the power supply;

– an over-temperature of the device;

– a reversing of the power supply polarity;

– an electrostatic discharge on the terminals; and

– a long duration overvoltage, larger than 16 V.

In particular, there are provided logic inputs 10, 11 and 12 which can be directly driven by means of TTL/CMOS logics and, through a suitable value input resistor, also directly by the battery voltage.

These inputs drive a plurality of outputs 13, 14, 15, 16 and 17, of a so-called high side type, the load of which must be connected at one end thereof to the corresponding output and at the other end thereof to the ground.

The logic driving the outputs 13 to 17 is disclosed in the following table:

```
================================================================

10    11    12    13        14        15        16        17

                  (21 W)   (21 W)    (5W)      (5W)      (5W)

----------------------------------------------------------------

-B    -B    -B    off       off       off       off       off

+B    -B    -B    +V        off       off       off       off

+B    +B    -B    +V        +V        off       off       off

+B    +B    +B    +V        +V        +V        +V        +V

with -B corresponding to a zero logic level and +B

corresponding to a high logi level.

================================================================
```

There are moreover provided further logic inputs 18, 19, 20 and 21 which can be directly driven by TTL/CMOS logic means and, through an input resistor, having any suitable value, directly by the battery voltage.

A diagnostic of the device provides for an addressing of the signal through the above mentioned inputs or pins from 18 to 21 by reading out the related status by means of the output or pin 22.

The provided diagnostics are as follows:

=================================================

| 18 | 19 | 20 | 21 | 22 |
|----|----|----|----|----|
| 0 | 0 | 0 | 0 | feedback 10 |
| 0 | 0 | 0 | 1 | feedback 11 |
| 0 | 0 | 1 | 0 | feedback 12 |
| 0 | 0 | 1 | 1 | overcurrent 13 |
| 0 | 1 | 0 | 0 | overcurrent 14 |
| 0 | 1 | 0 | 1 | overcurrent 15 |
| 0 | 1 | 1 | 0 | overcurrent 16 |
| 0 | 1 | 1 | 1 | overcurrent 17 |
| 1 | 0 | 0 | 0 | interrupted lamp or overcurrent |
| 1 | 0 | 0 | 1 | interrupted lamp |
| 1 | 0 | 1 | 0 | overvoltage |
| 1 | 0 | 1 | 1 | interrupted output 13 |
| 1 | 1 | 0 | 0 | interrupted output 14 |
| 1 | 1 | 0 | 1 | interrupted output 15 |
| 1 | 1 | 1 | 0 | interrupted output 16 |
| 1 | 1 | 1 | 1 | interrupted output 17 |

=================================================

In particular, at 23 there is indicated the positive of the power supply and at 24 the ground, whereas at 25 there are shown driving switches which are protected by corresponding resistors 26.

There are moreover provided an indicating lamp 27 which is conventionally arranged on the motor vehicle dashboard and operates as to signal to the driver the energizing of a function, there being moreover provided a further generic lamps 28.

The device according to the present invention is moreover adapted to filter out possible input command signals having a duration less than a preset delay time, or debouncing time, which can be properly adjusted so as to provide the device with a good immunity against short duration noise and contact rebounds.

The device will operate so as to assure the on current of the lamps (or the so-called in-rush current) for a conventional time of rated 15 ms.

In this connection it should be moreover pointed out that this in-rush current is typically of 2/3 times greater than the normal operation current of the lamp and that it is necessary to assure such current in order to prevent possible delays of the switching on of the lamps from occurring.

After the switching on operation, moreover, the electronic module 4 will limit the rated output current of each driving or driver stage to such a value which preserves a proper operation of the device.

From the above disclosure and the figures of the accompanying drawings it should be apparent that the device fully achieves the intended aim and objects.

While the invention has been disclosed and illustrated with reference to a preferred embodiment thereof, it should be apparent that the disclosed embodiment is susceptible to several modifications and variations all of which will come within the spirit and scope of the appended claims.

## Claims

1. A device for controlling the lamps of a motor vehicle, characterized in that said device comprises a solid state circuit integrating two or more power drivers, of a high side type, for controlling 21 watts lamps, and three or more drivers, also of a high side type, for controlling 5 watt lamps, said solid state circuit further comprising driving protection and diagnostic circuit means as necessary for a proper operation of said device.

2. A device, according to Claim 1, characterized in that said device comprises an electronic module including a power stage holding therein MOS drivers; a driver stage holding therein charge pump means for driving an end stage; and an auxiliary logic including therein an input logic, an inner voltage control, a thermal protecting means and other nececssary components.

3. A device, according to Claim 2, characterized in that said electronic module further comprises a power supply stage, open-circuit sensor means, current sensor means and diagnostic logic means driving a check panel.

4. A device, according to Claim 2, characterized in that said module further comprises a plurality of protecting means for preventing said device from erroneously operating as one or more of the following conditions occur:
   – a short circuit of the outputs toward ground or toward the positive of the power supply;
   – an over-temperature of the device;
   – a reversing of the power supply polarity;
   – an electrostatic discharge on the terminals;
   – a long duration overvoltage greater than 16 V.

5. A device, according to Claim 1, characterized in that said device further comprises logic input means which can be directly driven by TTL/CMOS logic means, or being adapted to be driven through an input resistor having a set value, directly by the voltage of battery means; said inputs driving a plurality of high-side outputs, the load of which is coupled at an end thereof to its corresponding output and at the other end thereof to the ground.

6. A device, according to Claim 1, characterized in that said device further comprises electronic means for filtering out input command signals having a duration less than a set delay of debouncing time.

7. A device, according to Claim 1, characterized in that said device comprises current control means for preserving the on current of said lamps or in-rush current thereof for a conventional time of 15 ms.

8. A device, according to Claim 2, characterized in that said electronic module comprises circuit means for limiting the rated output current of each driver stage to such a value adapted to preserve a proper operation of said device.

FIG. 1

FIG.2

EP 0 505 334 A1

European Patent Office

**EUROPEAN SEARCH REPORT**

Application Number

EP 92 83 0132

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 799 126 (KRUSE)<br>* abstract; figure 2 *<br>--- | 1-4,8 | B60Q11/00 |
| Y<br>A | US-A-5 001 398 (DUNN)<br>* abstract; figure 1 *<br>--- | 1<br>2-4 | |
| Y | DE-A-2 715 116 (KAMIN)<br>* figure 1 *<br>--- | 1 | |
| A | EP-A-0 080 425 (RENAULT VEHICLES INDUSTRIELS)<br>* abstract; figures 3,5 *<br>--- | 1-4 | |
| A | US-A-5 057 814 (ONAN)<br>* abstract; figure 2 *<br>--- | 1,3,4 | |
| A | FR-A-2 575 119 (HONDA MOTOR CO LTD AND STANLEY ELECTRIC CO LTD)<br>* abstract; figures 1,2 *<br>--- | 1 | |
| A | INGENIEURS DE L' AUTOMOBILE<br>no. 8, November 1984, PARIS<br>pages 92 - 96;<br>CLAES: 'LES CENTRALES DE CONTRYLE "VEGLIACONTROL"'<br>* the whole document *<br>----- | 1-4 | TECHNICAL FIELDS SEARCHED (Int. Cl.5)<br><br>B60Q |

The present search report has been drawn up for all claims

| Place of search | Date of completion of the search | Examiner |
|---|---|---|
| THE HAGUE | 14 JULY 1992 | Onillon C.G.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

8